# EUROPÄISCHE PATENTSCHRIFT

(11) **EP 3 491 355 B1**
(45) Veröffentlichungstag und Bekanntmachung des Hinweises auf die Patenterteilung: **13.05.2020**
(21) Anmeldenummer: 17751662.2
(22) Anmeldetag: 24.07.2017
(51) Int. Cl.: G01L 5/16

(54) **KRAFTMESSEINRICHTUNG ZUR MEHRACHSIGEN ERFASSUNG EINWIRKENDER KRÄFTE UND MOMENTE**
FORCE MEASURING DEVICE FOR MULTI-AXIS MEASUREMENT OF ACTIVE FORCES AND MOMENTS
SYSTÈME DE MESURE DE FORCE POUR LA DÉTECTION MULTIAXIALE DE FORCES ET DE COUPLES APPLIQUÉS

(30) Priorität: 01.08.2016 DE 102016114203; 01.08.2016 DE 102016114205; 01.08.2016 DE 102016114206; 01.08.2016 DE 102016114207; 18.08.2016 DE 102016114193
(43) Veröffentlichungstag der Anmeldung: 05.06.2019
(73) Patentinhaber: Nuton GmbH, 10179 Berlin (DE)
(72) Erfinder: DE MENDOZA, Adrián González, 10965 Berlin (DE)
(74) Vertreter: Patentanwälte Bauer Vorberg Kayser
(86) Internationale Anmeldenummer: PCT/EP2017/068584
(87) Internationale Veröffentlichungsnummer: WO 2018/024521

(56) Entgegenhaltungen:
- US-A1- 2006 107 761
- US-A1- 2014 245 838
- US-B1- 7 188 535

## Beschreibung

### Technisches Gebiet

Die Erfindung betrifft eine Kraftmesseinrichtung zur mehrachsigen Erfassung einwirkender Kräfte und Momente. Derartige Kraftmesseinrichtungen werden in der Fertigungstechnik, der Robotik und für Mess- und Prüfstände verwendet.

### Hintergrund der Erfindung

Das Ziel der vorliegenden Erfindung ist, es eine mehrachsige Kraftmesseinrichtung (im Folgenden auch "Sensor" genannt) zu schaffen, die sich insbesondere für die dynamische Erfassung von Prozess- und Bearbeitungskräften an Produktions- und Fertigungsmaschinen eignet. Beispiele für solche Maschinen sind mehrachsige Montageroboter, Zerspanungsmaschinen oder Prüfautomaten. An derartige, mehrachsige Kraftmesseinrichtungen werden abhängig von der Messaufgabe vielfältige Anforderungen gestellt. Die Wichtigsten davon sind:
- hohe Empfindlichkeit
- geringes Kanal-Übersprechen
- hohe Wiederholgenauigkeit
- gute Nullpunktstabilität
- hohe Steifheit und hohe Eigenfrequenz
- hohe Überlasttoleranz
- wartungsarm
- kostengünstig

Eine hohe Überlasttoleranz ist erforderlich, um zu verhindern, dass Kollisionen z.B. aufgrund einer fehlerhaften Programmierung den Sensor zerstören. Die Dimensionierung des Sensors orientiert sich in diesen Fällen also nicht nach der Größe der zu messenden Kräfte und Momente, sondern nach der jeweils zu erwartenden größten Überlast. Dies führt in vielen Fällen zu einem Zielkonflikt mit der Forderung nach einer hohen Empfindlichkeit, da ein hoher Anteil der zulässigen Verformungen als Sicherheitsreserve verwendet werden muss. Um dem entgegenzuwirken, muss die Empfindlichkeit und die Auflösung eines solchen Sensors und der zugehörigen Messelektronik so weit wie möglich gesteigert werden.

Weiterhin ist bei mehrachsigen Sensoren ein geringes Übersprechen zwischen den Kanälen erwünscht. Eine Kraftkomponente in Z-Richtung soll demnach möglichst keinen Messausschlag in X- oder Y-Richtung bewirken und umgekehrt.

Sensoren, welche in Fertigungs- und Prüfmaschinen integriert werden sollen, müssen zu den genannten Anforderungen noch wartungsarm, kostengünstig herstellbar und einfach montierbar sein. Außerdem müssen sie möglichst unanfällig gegen Umwelteinflüsse sein.

### Stand der Technik

Am Markt haben sich bisher für die mehrachsige Erfassung von Prozess- und Bearbeitungskräften piezoelektrische Sensoren etabliert, wie sie beispielsweise in der Patentschrift EP 0 270 693 B1 beschrieben sind. Sie zeichnen sich vor allem durch eine hohe Steifheit und eine sehr hohe Empfindlichkeit aus. Piezoelektrische Sensoren weisen aber Schwächen bei der Nullpunktstabilität und dem Übersprechverhalten auf. Darüber hinaus sind sie teuer und anfällig gegen thermische Einflüsse. Weiterhin sind handelsübliche mehrachsige piezoelektrische Sensoren selten in der Lage, die einwirkenden Kräften messtechnisch von einwirkenden Momenten zu unterscheiden bzw. diese überhaupt zu erfassen.

Als Alternative bieten sich Kraftmesseinrichtungen auf der Basis von Dehnmessstreifen (DMS) an, welche eine wesentlich bessere Nullpunktstabilität aufweisen und die durch vergleichsweise einfache Maßnahmen besser gegen thermische Einflüsse geschützt werden können. Dehnmessstreifen sind darüber hinaus sehr viel einfacher herzustellen, zu verarbeiten, anzuschließen und zu kalibrieren als sensorgeeignete Piezokristalle und bieten daher erhebliche Kostenvorteile. Moderne digitale Messverstärker erlauben Datenraten von 50kHz und mehr und sind damit inzwischen auch für solche Messaufgaben ausreichend schnell, welche bisher den piezoelektrischen Systemen vorbehalten waren. Allerdings erreichen DMS-basierte Sensoren bisher nicht die von den piezoelektrischen Sensoren bekannte Steifheit und Empfindlichkeit.

Mehrachsige Kraftmesseinrichtungen auf der Basis von Dehnmessstreifen sind in vielfältiger Ausführung bekannt. Als Beispiel sei hier die Patentschrift EP 0 396 568 B1 angeführt, welche einige typische Eigenschaften handelsüblicher mehrachsiger Kraftmesseinrichtungen zeigt. Gewöhnlich wird dabei ein flanschartiger Teil, über den die Kräfte eingeleitet werden, mit einem zweiten flanschartigen Teil, über den die Kräfte ausgeleitet werden, über eine elastisch verformbare Zone miteinander verbunden, in deren Bereich die Dehnmessstreifen appliziert sind. In der EP 0 396 568 B1 ist eine Kraftmesseinrichtung mit einer hexapodischen Anordnung von elastisch verformbaren Verbindungsstreben beschrieben. Die Längsverformungen dieser Verbindungsstreben werden mittels darauf applizierter Verformungsaufhehmer einzeln gemessen und danach miteinander in einer vorher im Rahmen eines komplexen Kalibrierverfahrens werksseitig ermittelten Matrix in einer Auswerteeinheit verrechnet. Die ausgegebenen Messwerte für die Kräfte Fx, Fy und Fz sowie der Momente Mx, My und Mz ergeben sich aus dieser Berechnung. Sensoren dieses Typs sind relativ aufwändig in der Herstellung und sind in Bezug auf Ihre Empfindlichkeit, Steifheit und Eigenfrequenz piezobasierten Sensoren in der Regel unterlegen.

Eine andere Variante einer mehrachsigen Kraftmesseinrichtung ist in der Schrift "A Criterion for the Optimal Design of Multi Axis Force Sensors" (Antonio Bicchi, Massachusetts Institute of Technology, Artificial Intelligence Labaratory, AIM-1263) dargestellt. Dabei tritt an die Stelle der Verbindungsstreben der EP 0 396 568 B1 ein durchgehendes Rohr mit geringer Wandstärke. Auf diesem sind die Dehnmessstreifen in derselben Art (also quasi hexapodisch) angeordnet wie dies in der EP 0 396 568 B1 dargestellt wird. Es zeigt sich, dass bei dieser Anordnung die Kraftmesseinrichtung deutlich steifer wird und der Messkörper leichter zu fertigen ist. Das Problem der aufwendigen Kalibrierung und das Erfordernis, alle Messbrücken auswerten zu müssen, um den Messwert einer Kraftkomponente zu isolieren, bleibt jedoch dasselbe. Die Empfindlichkeit wird durch diese Anordnung nicht verbessert.

Die Patentanmeldung CN 1776385 A zeigt eine Anordnung von Dehnmessstreifen zur Applikation auf einem zylindrischen Verformungskörper. Dabei wird der Verformungskörper in sechs Sektoren aufgeteilt, wobei sich in den Sektoren 1, 3 und 5 jeweils ein Paar Längs-/Quer-DMS zur Erfassung einer Längsverformung in Achsrichtung des Zylinders (Z) und in den Sektoren 2, 4 und 6 ein Paar gegensinnig orientierter Scher-DMS zur Erfassung von Kraftwirkungen lotrecht zur Achsrichtung des Zylinders befinden. Die DMS-Paare jedes Sektors 1 bis 6 werden als Halbbrücke verschaltet und in einem eigenen Messkanal 1 bis 6 ausgewertet. Die Messwerte für die Kräfte Fx, Fy und das Moment Mz ergeben sich durch einen rechnerischen Vergleich der Messkanäle 2, 4 und 6 und die Messwerte für die Kraft Fz und die Momente Mx und My durch einen rechnerischen Vergleich der Messkanäle 1, 3 und 5 in einer angeschlossenen Auswerteeinheit. Die entsprechende Kalibriermatrix wird hierdurch einfacher.

Die Patentschrift US 4,493,220 und die Patentanmeldung US 2015/0160081 A1 zeigen mehrachsige Kraftmesseinrichtungen mit einer rohrartigen Verformungszone, welche ebenfalls dem von A. Bicchi beschriebenen Aufbau ähneln, hier sind jedoch die Verformungsaufnehmer so angeordnet, dass seitlich einwirkende Kräfte in X- oder Y-Richtung eine Anordnung von gegensinnig orientierten Scher-DMS verformen, was eine einfachere Auswertung und Kalibrierung ermöglicht. Die DMS für die Z-Richtung sind Kombinationen von Längs- und Quer-DMS, welche in Achsrichtung der rohrartigen Verformungszone an der gleichen Winkelposition ober-oder unterhalb der Scher-DMS oder in gestapelten Rosetten übereinanderliegend angeordnet sind. Dieser Aufbau, bei der an ein- und derselben Winkelposition Verformungsaufnehmer für die Erfassung von Scher- und Längsverformungen angeordnet und diese unterschiedlichen Messkanälen zugeordnet sind (z.B. Fx und My), ist typisch für Kraftmesseinrichtungen dieses Typs. Bei in Achsrichtung übereinander angeordneten Messgittern vergrößert dies die erforderliche Höhe der rohrartigen Verformungszone und vermindert damit deren Steifheit. Bei gestapelten DMS ist die Wärmeabfuhr problematisch und die Stapelung führt insbesondere bei den oberen Schichten zu einer verminderten Signalgüte.

Kraftmesseinrichtungen dieser Art liefern gegenüber den verbreiteten hexapodischen Systemen eine bereits gute Steifheit. Alle Kraftmesseinrichtungen mit einer rohrartigen Verformungszone besitzen jedoch den prinzipbedingten Nachteil, dass die Steifheit des Rohres in axialer Richtung, welche hier mit der Z-Richtung gleichgesetzt ist, mindestens etwa dreimal höher als in radialer Richtung ist. Schaltungsbedingt erhöht sich der Unterschied bei den Messbereichen und der Empfindlichkeit gewöhnlich sogar auf 500%. Dies ist für Messaufgaben nachteilig, bei denen geringe Kräfte in allen Achsrichtungen aufgelöst werden sollen. Dem wird versucht entgegenzuwirken, indem mit einer möglichst hohen Auflösung und Messfrequenz gemessen wird, um den Überlappungsbereich zwischen den Messbereichen der Axial- und Radialkräfte zu vergrößern.

Die zum Stand der Technik gehörenden sechsachsigen Kraftmesseinrichtungen der Firma AMTI, wie zum Beispiel der Typ MC5-10000, entsprechen prinzipiell dem in der US 4,493,220 beschrieben Sensor. Sie bauen für die Erfassung der Kräfte Fx, Fy und Fz, sowie für die Momente Mx, My und Mz je einen eigenen Messkanal auf. Dies bietet den Vorteil, dass die Kalibrierwerte unmittelbar verständlich sind und eindeutig einer Kraftkomponente zugeordnet werden können.

Bei diesem Sensor ist die Zylinderfläche der rohrartigen Verformungszone in acht Sektoren aufgeteilt. Auf jeder der acht Sektoren befinden sich je zwei übereinander angeordnete Paare von Messgittern. Dabei dienen das erste Paar der Erfassung von Scherverformungen und das zweite Paar der Erfassung von Längsverformungen dieses Sektors. Auf der Zylinderfläche gegenüberliegende Sektoren, z.B. 1 und 5 sind gleichartig aufgebaut. Jeder Kraft Fx, Fy, Fz und jedem Moment Mx, My und Mz ist bei diesem Typ eine eigene Messbrücke zugeordnet. Jede der sechs Messbrücken ist als Vollbrücke ausgeführt. Die den Messbrücken Fx, Fy, Mx und My zugeordneten Vollbrücken werden aus 2 Messgitterpaaren aus 2 gegenüberliegenden Sektoren gebildet. Die den Messbrücken Fz und Mz zugeordneten Vollbrücken werden dagegen aus 4 Messgitterpaaren aus 4 Sektoren gebildet, dabei befinden sich zwei in Reihe geschaltete Messgitter in jedem Brückenquadranten, was zu einer Verdopplung des Brückenwiderstands und zu einer Halbierung der an jedem Messgitter anliegenden Speisespannung führt. Dies wiederum führt zu einer ungleichmäßigen Erwärmung der rohrartigen Verformungszone bei der Bestromung. Insgesamt werden für diese Beschaltung (4^{∗}4) + (2^{∗}8) = 32 Messgitter verwendet. Der beschriebene Aufbau macht es erforderlich, dass Messgitter unterschiedlicher Sektoren innerhalb des Sensors miteinander verdrahtet werden müssen.

Weiterhin offenbart die US 2014/0245838 A1 die Merkmale des Oberbegriffs des Anspruchs 1. Jeder Kraft Fx, Fy, Fz und jedem Moment Mx, My, Mz ist eine eigene Messbrücke zugeordnet, wobei jede der sechs Messbrücken als Vollbrücke ausgeführt ist, die jeweils aus Dehnungsmessstreifen aus verschiedenen Sektoren gebildet werden.

Die US 2006/0107761 A1 offenbart eine Kraftmesseinrichtung mit acht identischen Sensoranordnungen, wobei jedoch nur vier von diesen Dehnungsmessstreifen aufweisen. Die Kraftmesseinrichtung enthält acht Wheatstonebrücken, wobei jeder Sektor zwei Wheatstonebrücken aufweist.

Die US 7 188 535 B1 offenbart eine Kraftmesseinrichtung mit sechs Wheatstonebrücken, wobei jede Wheatstonebrücke von Sensoren gebildet ist, die in verschiedenen Sektoren liegen.

### Darstellung der Erfindung

Die folgende Darstellung der Erfindung bezieht sich auf eine Kraftmesseinrichtung bestehend aus einem ersten flanschartigen Teil und einem zweiten flanschartigen Teil, welche über eine rohrartige Verformungszone miteinander verbunden sind und auf der sich Verformungsaufnehmer zur Erfassung der Verformungen befinden, und diese Verformungen durch die Kräfte und Momente hervorgerufen werden, die auf den ersten flanschartigen Teil einwirken. Eine rohrartige Verformungszone wird gewählt, da hiermit die größtmögliche Steifheit erzielt werden kann und sich gleichzeitig richtungsabhängige Effekte minimieren lassen.

Die Aufgabe der vorliegenden Erfindung ist es, eine mehrachsige Kraftmesseinrichtung der genannten Art zu schaffen, die sich für die Erfassung einwirkender Kräfte und/oder Momente eignet und dabei eine hohe Empfindlichkeit mit einer hohen Messgenauigkeit verbindet. Außerdem sollen die Empfindlichkeitsunterschiede zwischen den axialen und radialen Krafteinwirkungen minimiert werden.

Erfindungsgemäß wird diese Aufgabe durch eine Kraftmesseinrichtung gemäß Anspruch 1 gelöst. Vorteilhafte Ausführungsformen dieser Kraftmesseinrichtung ergeben sich aus den Unteransprüchen 2-14.

Zur Lösung der gestellten Aufgabe teilt die erfindungsgemäße Kraftmesseinrichtung eine zylindrische Applikationsfläche für die Verformungsaufnehmer auf der rohrartigen Verformungszone umfangsmäßig in wenigstens 8 Sektoren auf, wobei auf jedem einzelnen Sektor S1 bis S8 mindestens ein Verformungsaufnehmer angeordnet ist, alle Verformungsaufnehmer eines Sektors jeweils in einer gemeinsamen Wheatstonebrücke miteinander verschaltet sind und jedem Sektor auf der rohrartigen Verformungszone ein um 180° um die Mittelachse der Verformungszone versetzter zweiter Sektor mit einer gleichartigen Anordnung von Verformungsaufnehmern gegenüberliegt. Diese Anordnung bietet gegenüber dem Stand der Technik den Vorteil einer einfacheren Verschaltung, einer verbesserten Kalibrierbarkeit und je nach Ausführung die Voraussetzung für eine deutliche erhöhte Empfindlichkeit des Sensors.

Eine gleichartige Anordnung von Verformungsaufnehmern in gegenüber liegenden Sektoren bedeutet hierbei, dass die Verformungsaufnehmer in beiden Sektoren so angeordnet bzw. ausgestaltet sind, dass sie jeweils zur Erfassung von Kräften und/oder Momenten mit gleicher Ausrichtung ausgebildet sind. Auch die Verschaltung der Verformungsaufnehmer zu einer gemeinsamen Wheatstonebrücke in gegenüber liegenden Sektoren ist hierzu vorzugsweise gleich. Als Verformungsaufnehmer werden insbesondere Dehnmessstreifen verwendet. Deren Messgitter können dann beispielsweise gleich ausgestaltet, gleich ausgerichtet und gleich verschaltet sein.

Die vorliegende Erfindung basiert dabei einerseits auf der Einsicht, dass die verminderte Empfindlichkeit in Z-Richtung prinzipiell durch eine mehrfach redundante Erfassung der Z-Verformungen erreicht werden kann. Dies wird erreicht, indem vorzugsweise vier der acht Sektoren oder zumindest der Erfassung der Z-Verformungen dienen.

Sie basiert andererseits auf der Erkenntnis, dass eine Verkürzung der rohrartigen Verformungszone die Kraftmesseinrichtung nicht nur steifer macht, sondern zusätzlich die Wärmeabfuhr von Dehnmessstreifen erleichtert und so eine höhere Speisespannung und damit eine höhere Empfindlichkeit ermöglicht. Daraus resultiert die Lösung, eine Beschaltungsform zu wählen, welche eine geringe Höhe der erforderlichen Messgitteranordnungen ermöglicht, wenn als Verformungsaufnehmer Dehnmessstreifen verwendet werden.

Die Erfindung basiert weiterhin auf der Feststellung, dass die Empfindlichkeit der Kraftmesseinrichtung insgesamt potentiell umso höher sein kann, je größer der von den Verformungsaufnehmern bedeckte Flächenanteil auf der rohrartigen Verformungszone ist, da damit der relative Wärmeeintrag pro Flächeneinheit zurückgeht und daher ebenfalls eine höhere Speisespannungen angelegt werden kann, die wiederum eine höhere Empfindlichkeit ermöglicht. Daraus resultiert die Lösung, eine Beschaltungsform zu wählen, welche eine sinnvolle, aber gleichzeitig möglichst vollflächige Besiedelung der Verformungszone mit Messgittern erlaubt.

Die Höhe H der rohrartigen Verformungszone ist daher vorteilhaft möglichst relativ kurz gewählt. Insbesondere kann die Höhe H der rohrartigen Verformungszone gleich oder sogar etwas kleiner als die Höhe h der Verformungsaufnehmer in Richtung der Mittelachse der Verformungszone sein. In dieser Ausführungsform erstrecken sich die Verformungsaufnehmer, d.h. vorzugsweise die Messgitter von Dehnmessstreifen, in axialer Richtung somit vollständig über die Höhe der Verformungszone. Sie können auch teilweise über die Verformungszone hinausragen. Nicht nur die Verformungszone dient dann als Applikationsfläche zur Anbringung der Verformungsaufnehmer, sondern diese können teilweise auch auf den flanschartigen Teilen der Kraftmesseinrichtung angebracht sein. Insbesondere kann dies für Trägerfolien der Fall sein, auf denen Messgitter angebracht sind. Beispielsweise können die Trägerfolien die Höhe H der Verformungszone überragen, während sich die zugehörigen Messgitter innerhalb der Verformungszone befinden. Als Verformungsaufnehmer im Sinne dieser Erfindung werden bei Dehnmessstreifen daher lediglich deren Messgitter bezeichnet.

Die Erfindung kann jedoch auch vorteilhaft genutzt werden, wenn die Höhe h der Verformungsaufnehmer kleiner ist als die Höhe H der rohrartigen Verformungszone, d.h. die Verformungsaufnehmer ragen nicht an die Enden der rohrförmigen Verformungszone heran. Auch hier kann vorgesehen sein, dass die Verformungszone nicht wesentlich länger ist als die Höhe h der Verformungsaufnehmer. Jedoch sind auch größere Höhen H der Verformungszone möglich. Beispielsweise kann die Höhe H bis zu zweimal so groß sein wie die Höhe h.

Eine bevorzugte Ausführungsform einer sechsachsigen Kraftmesseinrichtung teilt die Zylinderfläche der rohrartigen Verformungszone in acht Sektoren auf. Auf jedem der acht Sektoren befindet sich wiederum eine Gruppe von vier Messgittern, jedoch erfassen die Messgitter eines Sektors jeweils nur eine Verformungsrichtung. Die Messgitter eines Sektors bilden jeweils eine vollständige Vollbrücke und sind nicht mit Messgittern in anderen Sektoren verschaltet. Dies erlaubt eine wesentlich einfachere Leitungsführung innerhalb der Kraftmesseinrichtung und ein kompakteres Design der Messgitteranordnung, was eine Reduzierung der Höhe der rohrartigen Verformungszone erlaubt und damit zu einer Erhöhung der Steifheit der Kraftmesseinrichtung beiträgt.

Diese Ausführungsform der Erfindung wertet acht Messbrücken mit je vier Messgittern in acht Messkanälen aus, was in der Summe 32 Messgitter ergibt. Dabei liefert jeder Messkanal ein Signal, dass gleichzeitig für die messtechnische Erfassung einer Komponente einer Kraft und eines Moments verwendet wird, zum Beispiel Fx und Mz. Die Berechnung der Kräfte Fx, Fy und Fz sowie der Momente Mx, My und Mz erfolgt in einer angeschlossenen Auswerteeinheit durch einfache Addition. Die Berechnung der Kräfte und der Momente basiert dabei immer auf der redundanten Auswertung von zwei oder vier Messkanälen. Diese Redundanz erhöht den erzielbaren Signalrauschabstand für Fx, Fy, Mx und My gegenüber der zum Stand der Technik gehörenden Lösung der Firma AMTI auf 141% und für Fz und Mz sogar auf 200%. Durch die Kombination dieser Beschaltungsart mit einer verkürzten rohrartigen Verformungszone kann der Empfindlichkeitsunterschied zwischen Fx/Fy und Fz auf 150% gesenkt werden.

Fazit: Durch die Anwendung der erfindungsgemäßen Prinzipien werden im Vergleich zu einer zum Stand der Technik gehörenden sechsachsigen Kraftmesseinrichtung bei gleicher Lastauslegung folgende Vorteile erreicht:
- durch die redundante Auswertung von vorzugsweise 8 Messkanälen eine generelle Erhöhung der Empfindlichkeit und der Auflösung
- eine Verringerung der Empfindlichkeitsunterschiede zwischen den radialen und axialen Kraftmessungen
- durch die gegenüberliegende Lage gleichartiger Anordnungen von Dehnmessstreifen in vorzugsweise acht Sektoren eine gegenüber einer Anordnung von Messgittern in sechs Sektoren klarere Zuordnung einer Messgitteranordnung zu einer Kraftkomponente und damit eine vereinfachte Kalibrierung sowie einen geringeren richtungsabhängigen Messfehler
- durch die einfachere Verschaltung eine Verringerung des Herstellungsaufwands
- durch die Verschaltung aller Messgitter eines Sektors in einer gemeinsamen Wheatstonebrücke wird eine kompaktere Anordnung von Messgittern ermöglicht und die Zahl der erforderlichen Kontaktierungen reduziert, was eine Verringerung der erforderlichen Höhe der rohrartigen Verformungszone ermöglicht.

Weitere vorteilhafte Ausführungsformen der Erfindung sind in den Figurenbeschreibungen und in den Ansprüchen beschrieben.

### Bezugszeichenliste

- 1: Erster flanschartiger Teil
- 2: Zweiter flanschartiger Teil
- 3: Rohrartige Verformungszone
- 4: Verformungsaufnehmer (Dehnmessstreifen)
- 4.1: Verformungsaufnehmer Z links
- 4.2: Verformungsaufnehmer +45°
- 4.3: Verformungsaufnehmer -45°
- 4.4: Verformungsaufnehmer Z rechts
- 5: Applikationsfläche
- 6: Messkörper
- 7: Mittelachse

### Figurenbeschreibung

Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: einen schematischen Längsschnitt durch eine Ausführungsform einer erfindungsgemäßen Kraftmesseinrichtung mit mehreren Dehnmessstreifen;
- Fig. 2: eine Belastung in Z-Richtung auf eine Kraftmesseinrichtung gemäß Fig. 1;
- Fig. 3: eine Belastung in X-Richtung auf eine Kraftmesseinrichtung gemäß Fig. 1;
- Fig. 4: die Wirkung eines Kippmoments um die Y-Achse bei einer Kraftmesseinrichtung gemäß Fig. 1;
- Fig. 5: die Wirkung eines Drehmoments Mz im Gegenuhrzeigersinn um die Z-Achse bei einer Kraftmesseinrichtung gemäß Fig. 1;
- Fig. 6: eine Schnittdarstellung einer zum Stand der Technik gehörenden Kraftmesseinrichtung;
- Fig. 7: eine andere Darstellung der Kraftmesseinrichtung gemäß Fig. 6;
- Fig. 8: die Beschaltung der Kraftmesseinrichtung gemäß Fig. 6;
- Fig. 9: eine Schnittdarstellung einer Ausführungsform einer erfindungsgemäßen Kraftmesseinrichtung;
- Fig. 10: eine abgewickelte Applikationsfläche einer Kraftmesseinrichtung gemäß Fig. 9;
- Fig. 11: die Beschaltung der Wheatstonebrücken der Kraftmesseinrichtung gemäß Fig. 9;
- Fig. 12: eine alternative Anordnung von Verformungsaufnehmern;
- Fig. 13: eine andere Darstellung der Anordnung von Verformungsaufnehmern gemäß Fig. 12;
- Fig. 14: eine abgewickelte Applikationsfläche mit einer weiteren alternativen Anordnung von Verformungsaufnehmern;
- Fig. 15: eine Beschaltung der Anordnung von Verformungsaufnehmern gemäß Fig. 14; und
- Fig. 16: eine alternative Beschaltung der Anordnung von Verformungsaufnehmern gemäß Fig. 14.

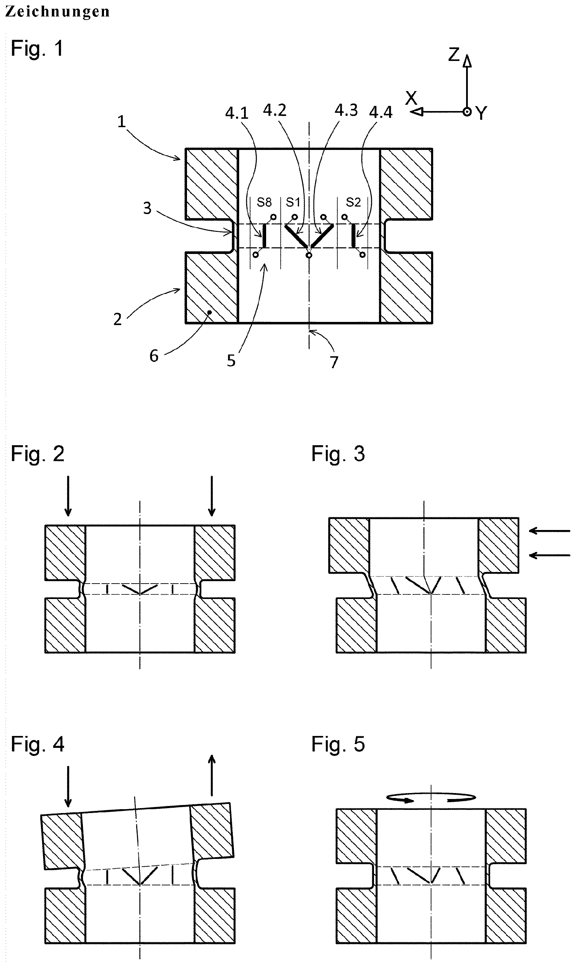

Die Figuren 1 bis 5 zeigen eine erfindungsgemäße Kraftmesseinrichtung und dienen der Begriffsbestimmung und der Beschreibung der möglichen Verformungen einer rohrartigen Verformungszone und darauf angeordneter Verformungsaufhehmer unter dem Einfluss unterschiedlicher Lastsituationen. Figur 1 zeigt einen Längsschnitt durch eine Ausführungsform einer erfindungsgemäßen Kraftmesseinrichtung. Die Kraftmesseinrichtung weist einen Messkörper 6 auf, der im Wesentlichen eine hohlzylindrische Form hat. Der einstückige Messkörper 6 besitzt drei funktionelle Zonen: Einen ersten flanschartigen Teil 1, über den die zu messenden Kräfte eingeleitet werden, einen zweiten flanschartigen Teil 2 über den die eingeleiteten Kräfte aufgenommen und abgeleitet werden, sowie eine dazwischenliegende rohrartige Verformungszone 3, über die alle auf den ersten flanschartigen Teil 1 einwirkenden Zug-, Druck-, Torsions- und Scherkräfte an den zweiten flanschartigen Teil 2 weitergeleitet werden. Die rohrartige Verformungszone 3 besitzt im relevanten Verformungsbereich eine annähernd einheitliche Wandstärke und besteht aus einem federelastischen Material.

Die rohrartige Verformungszone zwischen den beiden flanschartigen Teilen wird im Ausführungsbeispiel der Figur 1 durch einen nutartigen Einstich auf der Außenseite der Kraftmesseinrichtung gebildet. Sie kann jedoch auch durch einen nutartigen Einstich auf der Innenseite der Kraftmesseinrichtung gebildet werden. Auch eine Kombination von einem außenseitigen und einem innenseitigen Einstich ist möglich.

Auf der Innenfläche der rohrartigen Verformungszone 3 sind im Ausführungsbeispiel der Figur 1 mehrere Verformungsaufnehmer angebracht, von denen beispielhaft vier Verformungsaufnehmer 4.1 bis 4.4 gezeigt sind. Die Verformungsaufhehmer werden im Folgenden insgesamt auch mit der Bezugsziffer 4 bezeichnet. In einer alternativen Ausführungsform der Erfindung können die Verformungsaufhehmer jedoch auch auf der Außenseite der rohrförmigen Verformungszone 3 angebracht sein, d.h. innerhalb des außenseitigen Einstichs. Auch Mischformen beider Varianten sind möglich.

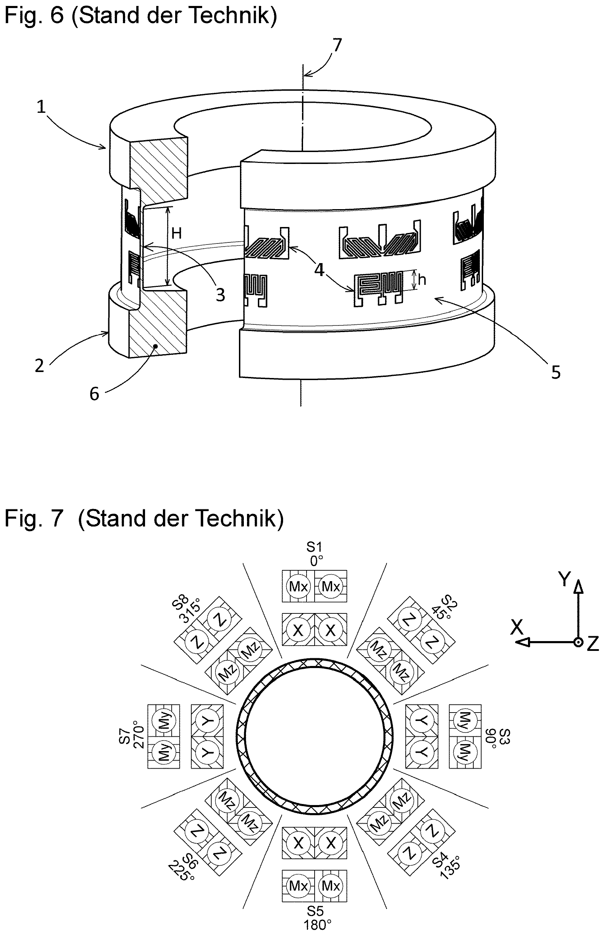

Die Innenfläche der rohrartigen Verformungszone 3 bildet im gezeigten Ausführungsbeispiel die Applikationsfläche 5 der beispielhaft gezeigten Verformungsaufnehmer (4.1 bis 4.4). Der dicke Balken der Verformungsaufnehmer symbolisiert dabei die Hauptrichtung der jeweils erfassten Verformungen. Die kreisförmigen Flächen an den Enden der Balken symbolisieren die Kontaktpunkte für die Drahtanbindung. Obwohl die Verformungsaufnehmer somit in dieser Darstellung eher die Gestalt von Halbleiter-DMS besitzen, werden in der Praxis aufgrund der einfacheren Verarbeitung und der geringeren Kosten wohl eher klassische Dehnmessstreifen Verwendung finden. Alle folgenden Darstellungen in den Figuren 6 und folgende stellen daher klassische DMS dar. Die Verformungen der rohrartigen Verformungszone 3 werden von den Verformungsaufnehmern 4.1 bis 4.4 in elektrische oder optische Zustandsänderungen gewandelt und an eine nicht dargestellte Auswerteeinheit weitergeleitet.

Die Applikationsfläche ist umfangsmäßig in wenigstens acht nebeneinanderliegende Sektoren S1 bis S8 eingeteilt, die jeweils spezifische Anordnungen von Verformungsaufnehmern enthalten. In den Ausführungsbeispielen der Figuren sind genau acht Sektoren vorgesehen. Es können jedoch auch mehr Sektoren vorgesehen werden, wobei vorzugsweise eine gerade Anzahl an Sektoren gewählt wird, um jeweils zwei gegenüber liegende Sektoren gleichartig mit Verformungsaufnehmern auszugestalten. Es kann jedoch insgesamt auch eine ungerade Anzahl von Sektoren mit Verformungsaufnehmern gewählt werden, sofern mindestens acht dieser Sektoren so angeordnet sind, dass die erfindungsgemäße Beschaltung von Verformungsaufnehmern realisiert werden kann.

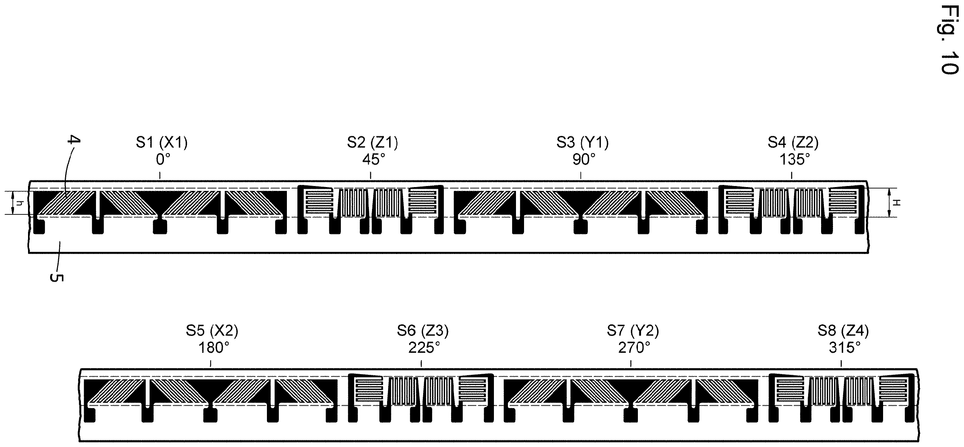

In der Figur 1 dargestellt sind nur die Sektoren S1, S2 und S8. Sind Verformungsaufnehmer auf der Innenseite der Verformungszone 3 angeordnet, wird diese Innenseite dazu in acht Sektoren aufgeteilt. Sind Verformungsaufhehmer hingegen auf der Außenseite der Verformungszone 3 angeordnet, wird entsprechend die Außenseite in acht Sektoren aufgeteilt. Bei Mischformen wird die Einteilung in Sektoren entsprechend sowohl auf der Innenseite als auch auf der Außenseite vorgenommen. In den Figuren 1 bis 5 sind zwei im Winkel von +45° und -45° zur Mittelachse 7 der Verformungszone 3 angeordnete Verformungsaufnehmer (4.2 und 4.3) in einem gemeinsamen Sektor S1 angeordnet. Diese Verformungsaufhehmer erfassen die Scherverformungen der rohrartigen Verformungszone 3 aufgrund von lotrecht zur Mittelachse 7 in X-Richtung einwirkenden Kräften oder von Momenten, welche die rohrartige Verformungszone 3 tordieren. Sie sind in einer gemeinsamen Wheatstonebrücke X1 verschaltet. Sie besitzen daher einen gemeinsamen Kontaktpunkt in der Mitte. Gleichartige Wheatstonebrücken zu X1 befinden sich auch in drei weiteren, hier nicht dargestellten Sektoren S3, S5 und S7, welche um 90°, 180° und 270° versetzt auf der rohrartigen Verformungszone 3 angeordnet sind. Diese bilden die Wheatstonebrücken Y1, X2 und Y2 (siehe z.B. Figur 10).

Zwei weitere Verformungsaufnehmer im Sektor S8 (4.1) und im Sektor S2 (4.4) sind so orientiert, dass sie die entlang der Mittelachse 7 aufgrund von Zug- und Druckkräften eintretenden Verformungen erfassen. Diese sind in je einer eigenen Wheatstonebrücke verschaltet und bilden die Messkanäle Z1 (4.1) und Z2 (4.4). Sie werden durch zwei weitere gleichartig aufgebaute Anordnungen von Verformungsaufnehmern in den jeweils gegenüberliegenden Sektoren ergänzt. Diese bilden die Messkanäle Z3 und Z4 (siehe z.B. Figur 10).

Die Figuren 2 bis 5 zeigen die Verformungen der rohrartigen Verformungszone 3 und der Verformungsaufnehmer (4.1 bis 4.4) bei verschiedenen Lastfällen. Im Interesse einer übersichtlicheren Darstellung wurden die Kontaktflächen und die Bezugszeichen weggelassen. Alle anderen Elemente der Zeichnungen sind aber mit den dargestellten Elementen in Figur 1 identisch und sind dort beschrieben.

Figur 2 zeigt eine Belastung in Z-Richtung auf eine erfindungsgemäße Kraftmesseinrichtung. Der erste flanschartige Teil 1 drückt in Richtung des zweiten flanschartigen Teils 2 und staucht dabei die rohrartige Verformungszone 3 in Längsrichtung (Z-Richtung). Dabei werden die Verformungsaufnehmer 4.1 bis 4.4 verkürzt. Gleichzeitig wird die rohrartige Verformungszone nach außen ausgebaucht, wodurch (nicht dargestellte) Quer-DMS gedehnt würden. Zwar erfahren in diesem Beispiel alle dargestellten Verformungsaufnehmer eine Stauchung, jedoch sind die mittleren beiden Verformungsaufnehmer 4.2 und 4.3 in der Wheatstonebrücke X1 in benachbarten Brückenquadranten verschaltet, so dass sich insgesamt keine Verstimmung dieser Wheatstonebrücke bei einer Z-Belastung ergibt. Dagegen können die Messwertänderungen der beiden Verformungsaufhehmer 4.1 und 4.4 in der angeschlossenen Auswerteeinheit addiert werden, was zu einer höheren Signalgüte führt.

Figur 3 zeigt eine Belastung in X-Richtung, bei der der erste flanschartige Teil 1 gegenüber dem zweiten flanschartigen Teil 2 seitlich verschoben wird. Als Resultat dieser Belastung wird der Verformungsaufnehmer 4.2 gedehnt und der Verformungsaufnehmer 4.3 gestaucht. Hierdurch kommt es zu einer Verstimmung der Wheatstonebrücke X1 und damit zu einer Messwertänderung. Die Länge der rohrartigen Verformungszone bleibt dabei weitgehend erhalten, so dass es zu keiner Messwertänderung der Verformungsaufnehmer 4.1 und 4.4 kommt.

Figur 4 zeigt die Wirkung eines Kippmoments um die Y-Achse, bei der es links der Mitte zu einer Druckbelastung und rechts der Mitte zu einer Zugbelastung auf den ersten flanschartigen Teil 1 kommt. Der Verformungsaufnehmer 4.1 wird dabei im selben Maße gestaucht wie der Verformungsaufnehmer 4.4 gelängt wird. Durch Vergleich der Einzelmesswerte der Messkanäle von Z1 und Z2 kann die Auswerteeinheit auf eine Momenteinwirkung um die Y-Achse herum schließen.

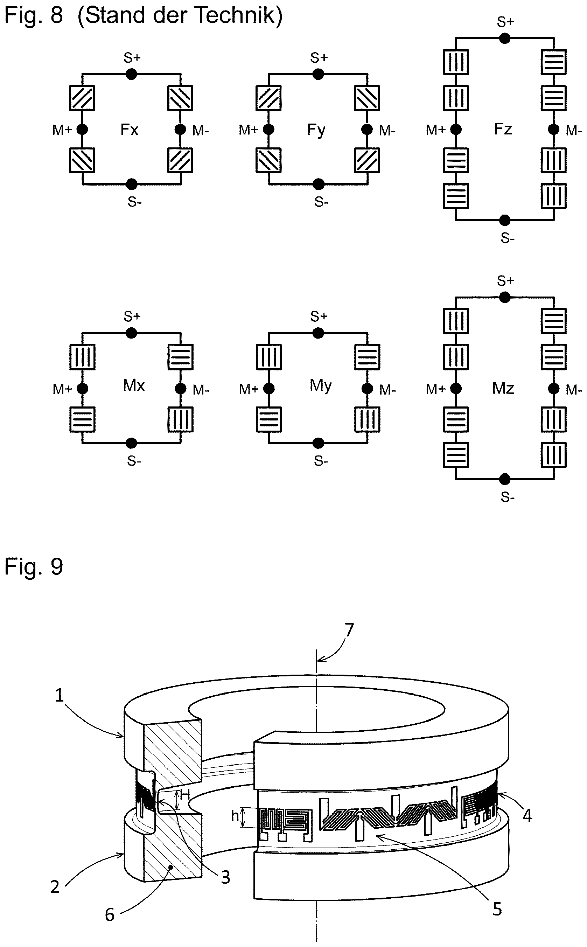

Unvermeidlich erfährt bei einem einwirkenden Kippmoment auch die Wheatstonebrücke X1 mit den beiden Verformungsaufnehmern 4.2 und 4.3 eine Verstimmung, da der Verformungsaufnehmer 4.2 leicht gestaucht und der Verformungsaufnehmer 4.3 leicht gedehnt wird. Diese Verstimmung steht jedoch in einem linearen Verhältnis zu der Verstimmung der Wheatstonebrücken in anderen Sektoren und kann daher rechnerisch kompensiert werden. Auf eine rechnerische Kompensation kann verzichtet werden, wenn diese Wheatstonebrücke X1 als Vollbrücke mit zwei weiteren Verformungsaufnehmern in diesem Sektor aufgebaut wird, wie dies zum Beispiel in Figur 8 beschrieben ist.

Figur 5 zeigt die Wirkung eines Drehmoments Mz im Gegenuhrzeigersinn um die Z-Achse, welche die rohrartige Verformungszone tordiert. Dabei erfahren alle Wheatstonebrücken X1, Y1, X2 und Y2 dieselbe Verstimmung, wodurch ein einwirkendes Drehmoment Mz durch Addition der gleichgerichteten Messwertänderungen dieser Brücken detektiert wird und so klar von anderen Belastungsarten abgegrenzt werden kann.

Figur 6 zeigt eine Schnittdarstellung eines Beispiels einer zum Stand der Technik gehörenden Kraftmesseinrichtung mit einem ersten flanschartigen Teil 1, einem zweiten flanschartigen Teil 2 und einer rohrartigen Verformungszone 3, welche beide Teile miteinander verbindet. Dabei ist der einteilige Messkörper 6 von innen ausgedreht. Der dünnwandige Teil bildet die rohrartige Verformungszone 3 mit der Höhe H. Diese Höhe H ist typischerweise um ein mehrfaches größer als die Höhe h der applizierten Dehnmessstreifen 4. Die insgesamt 32 Dehnmessstreifen sind in zwei Ebenen mit jeweils 16 Messgittern angeordnet. Die Kraftmesseinrichtung ist sechsachsig ausgeführt.

Figur 7 zeigt eine andere Darstellung der zum Stand der Technik gehörenden sechsachsigen Kraftmesseinrichtung aus Figur 6. Figur 7 zeigt in der Mitte einen schraffierten Ring, welcher einen Schnitt durch die rohrartige Verformungszone 3 darstellt. Darum herum gruppieren sich Anordnungen von je vier Verformungsaufnehmern in acht Sektoren S1 bis S8. Diese befinden sich eigentlich auf der äußeren (oder inneren) Zylinderfläche der rohrartigen Verformungszone 3 und wären in der gewählten Ansicht nicht sichtbar; zur besseren Darstellung wurden sie hier jedoch in die Zeichenebene ausgeklappt. In jedem der Sektoren befindet sich je ein Paar Verformungsaufnehmer für die Erfassung von axialen Verformungen der rohrartigen Verformungszone (Z, Mx und My) und ein weiteres Paar Verformungsaufnehmer zur Erfassung von radialen Verformungen (Scherverformungen) der rohrartigen Verformungszone (Fx, Fy und Mz). Jedes dieser Paare von Verformungsaufnehmern ist mit mindestens einem anderen Paar in mindestens einem anderen Sektor zu einer Wheatstonebrücke verschaltet.

Figur 8 zeigt die Beschaltung der in Figur 6 und 7 dargestellten, zum Stand der Technik gehörenden Kraftmesseinrichtung. Die der Kraftwirkung Fx zugeordnete Wheatstonebrücke beispielsweise nutzt je ein paar Verformungsaufnehmer aus dem Sektor S1 und dem gegenüberliegenden Sektor S5. Die Verbindung der beiden Paare in derselben Wheatstonebrücke erfordert eine Verdrahtung, die halb um den Sensor herumführt. Dies gilt in gleicher Weise auch für die Wheatstonebrücken Fy, Mx und My. Die Wheatstonebrücken für Fz und Mz verwenden in jedem Brückenquadranten zwei in Reihe geschaltete Verformungsaufnehmer. Hierdurch verdoppelt sich der Brückenwiderstand. Wird daher für diese Brücken die gleiche Speisespannung angelegt wie bei den Brücken mit nur vier Verformungsaufnehmern, reduziert sich die abfallende Spannung an jedem Verformungsaufnehmer auf die Hälfte. Kann dem nicht durch eine Verdopplung der Speisespannung entgegengewirkt werden, wird hier 50% der möglichen Empfindlichkeit verschenkt. Eine Verdopplung der Speisespannung ist aber nur dann möglich, wenn die resultierende Spannung nicht über 10V liegt, da am Markt kaum Messverstärker mit höherer Speisespannung erhältlich sind. Wird aber für alle sechs Wheatstonebrücken die gleiche Speisespannung verwendet, entsteht ein thermisches Ungleichgewicht und damit mechanische Spannungen im Messkörper, die zu Messfehlern führen können. Die beiden in Reihe geschalteten Verformungsaufnehmer jedes Brückenquadranten innerhalb der Wheatstonebrücken Fz und Mz sind jeweils in unterschiedlichen Sektoren lokalisiert; außerdem werden für den Aufbau der Wheatstonebrücken für Fz und Mz Verformungsaufnehmer aus insgesamt je vier Sektoren verwendet, wodurch die Beschaltung dieser Brücken sehr viele Querverbindungen rund um den Sensorkörper erfordert.

Figur 9 zeigt eine Schnittdarstellung einer bevorzugten Ausführungsform einer erfindungsgemäßen Kraftmesseinrichtung analog der in Figur 6 dargestellten Kraftmesseinrichtung. Dabei entspricht die Kraftmesseinrichtung in ihrem Wesentlichen Aufbau der Kraftmesseinrichtung gemäß der Figur 6. Es sind somit auch hier zwei flanschartige Teile 1, 2 und eine dazwischen liegende rohrartige Verformungszone 3 vorgesehen. Die Verformungszone 3 ist federelastisch ausgeführt und kann durch einen nutartigen Einstich gebildet sein. Im Gegensatz zu der zum Stand der Technik gehörenden Kraftmesseinrichtung aus Figur 6 sind jedoch die 32 Dehnmessstreifen 4 hier in einer Ebene dicht nebeneinander auf der Außenseite der Verformungszone 3 angeordnet. Die Höhe H der rohrartigen Verformungszone 3 ist deutlich verkürzt und entspricht annähernd der Höhe h der Messgitter der Dehnmessstreifen 4.

Dabei weist die Kraftmesseinrichtung sowohl auf ihrer Innenseite als auch auf ihrer Außenseite eine umlaufende Nut auf. Die Breite der äußeren Nut ist jedoch größer als die Breite der inneren Nut. Beide Nuten liegen im gleichen Bereich, so dass sie insgesamt eine rohrartige Verformungszone 3 mit einer reduzierten Wandstärke ausformen. Die Höhe H der Verformungszone 3 entspricht in dieser Ausführungsform der Breite der inneren Nut. Die Höhe H der Verformungszone 3 kann dabei genau der Höhe h der Verformungsaufhehmer 4 in Richtung der Mittelachse 7 der Verformungszone entsprechen. Die Höhe H kann auch geringfügig größer als die Höhe h sein. Die Verformungsaufhehmer 4 befinden sich in demjenigen Bereich der äußeren Nut, an den die innere Nut angrenzt.

Figur 10 zeigt die abgewickelte Applikationsfläche 5 einer erfindungsgemäßen Kraftmesseinrichtung gemäß Figur 9. Darauf befinden sich Anordnungen von je vier Verformungsaufnehmern in acht Sektoren S1 bis S8, von denen ein Verformungsaufnehmer im Sektor S1 beispielhaft erneut mit der Bezugsziffer 4 gekennzeichnet ist. Jedem Sektor ist zur Kennzeichnung seiner Lage auf dem Umfang der abgewickelten Applikationsfläche 5 eine Gradzahl zugeordnet. Anders als bei der zum Stand der Technik gehörenden Lösung befinden sich in jedem Sektor vier zu einer gemeinsamen Vollbrücke verschaltete Verformungsaufhehmer und dienen der Erfassung der gleichen Verformungsrichtung. Jede Wheatstonebrücke repräsentiert dabei einen von acht Messkanälen. Diese Messkanäle sind entsprechend ihrer Ausrichtung mit den Buchstaben X, Y und Z und einer ergänzenden Nummer gekennzeichnet (z.B. X1, Y2 oder Z4). In der dargestellten Ausführungsform der Erfindung werden jeweils zwei Vollbrücken der Kraftrichtung X zugeordnet (X1 und X2 in um 180° gegenüber liegenden Sektoren S1 und S5), zwei weitere der Kraftrichtung Y (Y1 und Y2 in um 180° gegenüber liegenden Sektoren S3 und S7), sowie dazwischenliegend vier Vollbrücken der Kraftrichtung Z (Z1 bis Z4 in um 180° gegenüber liegenden Sektoren S2 und S6 bzw. S4 und S8). Jede Wheatstonebrücke liefert eine Vergleichsspannung, welche mit einer gespeicherten Normalspannung (Nullwert) verglichen wird. Der Differenzwert dieser beiden Spannungen bildet den Kanalmesswert. Die Messwerte für die sechs Kraftkomponenten Fx, Fy, Fz, Mx, My und Mz ergeben sich aus der Verrechnung der Kanalmesswerte in einer angeschlossenen Auswerteeinheit und zwar für

| | |
|---|---|
| 1. eine einwirkende Kraft in X-Richtung (Fx) aus | X1 - X2 |
| 2. eine einwirkende Kraft in Y-Richtung (Fy) aus | Y1 - Y2 |
| 3. eine einwirkende Kraft in Z-Richtung (Fz) aus | Z1 + Z2 + Z3 + Z4 |
| 4. ein einwirkendes Kippmoment um die X-Achse (Mx) aus | (Z1 + Z4) - (Z3 + Z2) |
| 5. ein einwirkendes Kippmoment um die Y-Achse (My) aus | (Z1 + Z2) - (Z3 + Z4) |
| 6. ein einwirkendes Torsionsmoment um die Z-Achse (Mz) aus | X1 + X2 + Y1 + Y2 |

Die Höhe H bezeichnet auch in der Figur 10 die Höhe der rohrartigen Verformungszone, welche nur unwesentlich größer als die Höhe h der Messgitter der DMS ist. Die Abmessungen der rohrartigen Verformungszone sind dabei auf der Applikationsfläche 5 mit zwei parallelen gestrichelten Linien dargestellt. Weiterhin soll die gewählte Darstellung die Absicht verdeutlichen, einen möglichst großen Teil der rohrartigen Verformungszone mit Messgittern zu bedecken, um eine möglichst große Fläche zur Ableitung der entstehenden Wärme zur Verfügung zu stellen. Dies ermöglicht höhere Speisespannungen und führt zu einer geringeren thermischen Einschwingzeit. Bei größeren Durchmessern und geringerer Höhe H der rohrartigen Verformungszone führt die Forderung nach einer möglichst vollflächigen Bedeckung der rohrartigen Verformungszone mit Messgittern zu Ausgestaltungen von Messgitteranordnungen, welche deutlich flacher und breiter ausfallen.

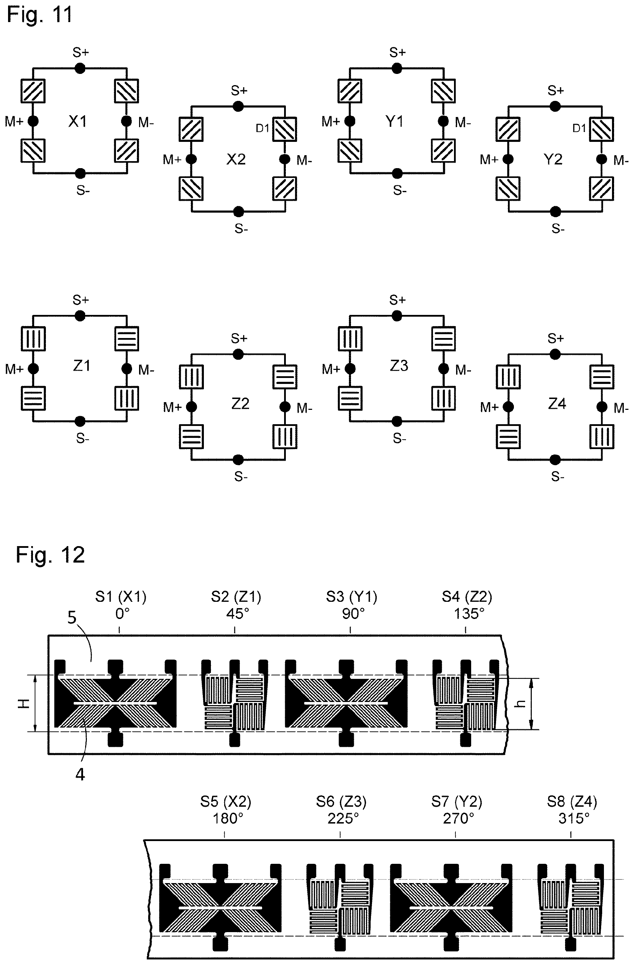

Figur 11 zeigt die Beschaltung der acht Wheatstonebrücken der in Figur 9 dargestellten erfindungsgemäßen Kraftmesseinrichtung. Es wird sichtbar, dass alle acht Wheatstonebrücken gleichartig aufgebaut sind und sich in jedem Brückenquadranten jeweils nur ein Verformungsaufnehmer befindet. Dies bedeutet, dass alle Kanäle den gleichen Brückenwiderstand besitzen und in allen Kanälen mit derselben Speisespannung gearbeitet werden kann, ohne dass hierdurch kanalbedingte Unterschiede bei der an den Einzel-DMS abfallenden Spannung auftreten.

Figur 12 zeigt eine andere mögliche Anordnung von Verformungsaufhehmern. Diese kann vorteilhaft zur Anwendung kommen, wenn der Außendurchmesser der Kraftmesseinrichtung klein ist und eine nebeneinanderstehende Anordnung von 32 DMS aus Platzgründen nicht möglich ist. Obwohl hier - wie beim Stand der Technik - DMS in zwei Ebenen übereinander angeordnet sind, vereinfacht die kompakte Anordnung der in einer gemeinsamen Brücke verschalteten DMS dennoch die Reduzierung der Höhe H und trägt so zu einer höheren Steifheit bei. Diese Anordnung von Verformungsaufnehmern ist auch dann vorteilhaft, wenn aus Kosten oder Zeitgründen auf DMS-Kombinationen aus dem Standardsortiment der großen Hersteller zurückgegriffen werden soll, da zu Vollbrücken verschaltete Anordnungen von je vier DMS in den gezeigten Varianten am Markt leicht beschaffbar sind. Die hier dargestellte Messgitteranordnung vereinfacht außerdem die Verdrahtung, da jede Wheatstonebrücke über die vier Anschlusspunkte direkt und ohne Zwischenverdrahtungen innerhalb der Wheatstonebrücke direkt mit dem zugeordneten Messverstärker verbunden werden kann. Diese Variante unterscheidet sich gegenüber der in Figur 10 dargestellten Anordnung von Dehnmessstreifen dagegen nur in der räumlichen Verteilung der DMS innerhalb eines Sektors. Die Sektorenaufteilung aus Figur 10 und die in Figur 11 beschriebene Beschaltung gelten für diese Anordnung in der gleichen Weise.

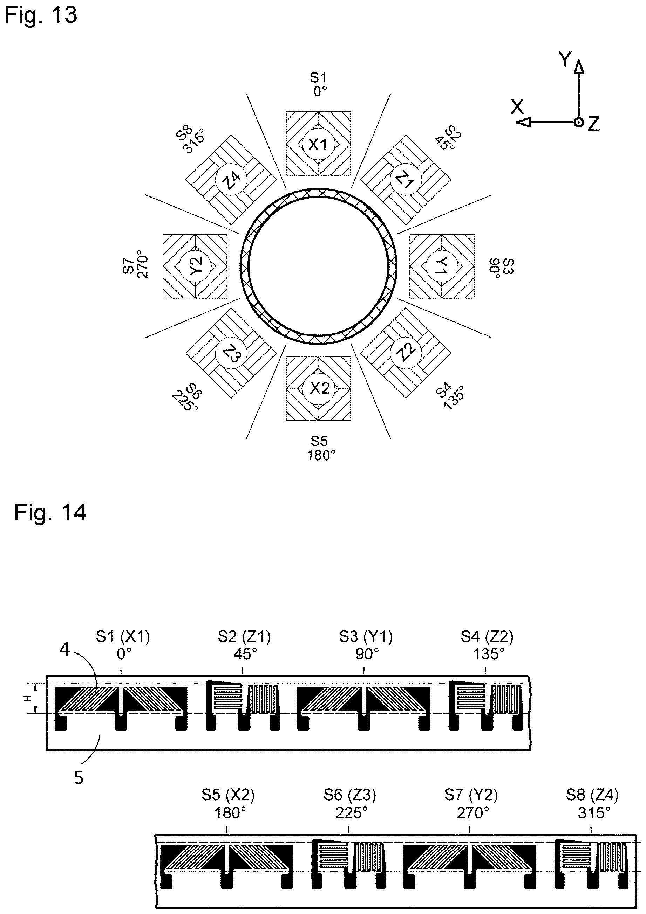

Figur 13 zeigt die aus Figur 12 bekannte Ausführungsform der Erfindung in kreisförmiger Anordnung, analog der in Figur 7 dargestellten Darstellungsform. Sie dient außerdem der Verdeutlichung der in Figur 10 beschriebenen sektoriellen Aufteilung der Applikationsfläche.

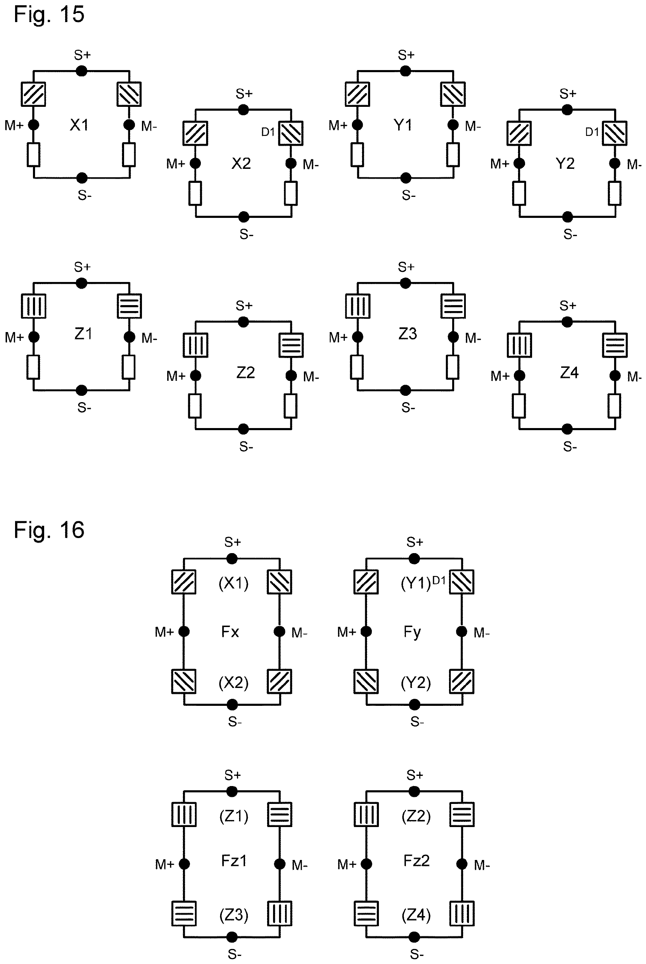

Figur 14 verwendet dieselbe Darstellungsform wie Figur 10 und Figur 12 und zeigt eine Abwicklung der zylindrischen Applikationsfläche 5 mit einer weiteren alternativen Anordnung von Verformungsaufhehmern. Bei dieser Ausführung wird in jedem der acht Sektoren jedoch nur eine Halbbrücke bestehend aus zwei nebeneinanderliegenden Verformungsaufnehmern angeordnet. Diese Anordnung ist vorteilhaft, wenn eine geringe Höhe H der rohrartigen Verformungszone mit einem kleinen Außendurchmesser der Verformungszone kombiniert werden soll. Weiterhin können bei dieser Ausführungsform die Herstellungskosten durch die geringere Anzahl von Verformungsaufnehmern gesenkt werden. Gleichzeitig reduziert sich jedoch auch die erzielbare Empfindlichkeit auf die Hälfte. Für diese Ausführung gibt es je nach Einsatzzweck zwei bevorzugte Beschaltungen, welche in Figur 15 und Figur 16 näher ausgeführt werden.

Figur 15 zeigt eine Beschaltung der in Figur 14 dargestellten Anordnung von Verformungsaufnehmern, deren Eigenschaften und Vorzüge im Wesentlichen der in Figur 10 bis 13 beschrieben Lösungen entsprechen. Der einzige Unterschied besteht darin, dass die Wheatstonebrücken als Halbbrücken ausgeführt und durch Ersatzwiderstände ergänzt sind.

Figur 16 zeigt eine alternative Beschaltung der in Figur 14 beschriebenen Anordnung von Verformungsaufnehmern für eine dreiachsige Kraftmesseinrichtung. Hierbei werden die auf der Zylinderfläche jeweils gegenüberliegenden Paare von Verformungsaufnehmern zu einer Vollbrücke verschaltet. Somit entstehen vier Messkanäle. Diese zeichnen sich dadurch aus, dass sie ohne angeschlossene Auswerteeinheit direkt die Messwerte für die Kräfte einer Raumrichtung ausgeben; so bilden die Halbbrücken in den Sektoren S1(X1) und S5(X2) gemeinsam eine Vollbrücke zur Erfassung der Kräfte in X-Richtung (Fx), die Halbbrücken in den Sektoren S3(Y1) und S7(Y2) gemeinsam eine Vollbrücke zur Erfassung der Kräfte in Y-Richtung (Fy). Die gegenüberliegenden Paare von Verformungsaufnehmern in den Sektoren S2(Z1) und S6(Z3) sowie die Paare in den Sektoren S4(Z2) und S8(Z4) bilden jeweils eine Vollbrücke Fz1 und Fz2, die unabhängig voneinander Kräfte in Z-Richtung erfassen. Diese Dopplung der Z-Kanäle kann durch Verrechnung in einer angeschlossenen Auswerteeinheit wiederum zur Erhöhung der Empfindlichkeit in Z genutzt werden. Die in Figur 16 beschriebene Verschaltung erlaubt bei einem einzelnen Sensor zunächst keine direkte Erfassung der einwirkenden Momente, dies ist aber bei einzelnen Anwendungen auch nicht unbedingt erforderlich, da oftmals nur die Kraftkomponenten Fx, Fy und Fz von Interesse sind. Werden dagegen mehrere Sensoren dieses Typs verwendet, um beispielsweise eine Kraftmessplatte darauf aufzusetzen, kann unter Berücksichtigung der Einbaulage aus den Unterschiedswerten der Messwerte verschiedener Sensoren auf die einwirkenden Momente rückgeschlossen werden.

Alternativ zu der in Figur 16 dargestellten Ausführung der Erfindung kann aber einer der beiden Z-Kanäle auch durch einen Kanal zur Erfassung von Momenten Mz um die Z-Achse herum ersetzt werden. Dabei werden die Verformungsaufnehmer in den betroffenen Sektoren durch Aufnehmer zur Erfassung von Scherverformungen ersetzt. So entsteht eine vierachsige Kraftmesseinrichtung für Mz, Fx, Fy und Fz.

## Patentansprüche

1. Kraftmesseinrichtung zur mindestens dreiachsigen Erfassung von Kräften Fx, Fy und Fz und/oder Momenten Mx, My und Mz bestehend aus einem ersten flanschartigen Teil (1), über den die zu messenden Kräfte/Momente eingeleitet werden, einem zweiten flanschartigen Teil (2), über den die eingeleiteten Kräfte/Momente aufgenommen und abgeleitet werden, und eine diese beiden Teile verbindende rohrartige Verformungszone (3), über die alle auf den ersten flanschartigen Teil (1) einwirkenden Zug-, Druck-, Torsions- und Scherkräfte an den zweiten flanschartigen Teil (2) weitergeleitet werden, wobei wenigstens die innere oder äußere Fläche der rohrartigen Verformungszone (3) als Applikationsfläche (5) für Verformungsaufnehmer (4) dient und die rohrartige Verformungszone (3) umfangsmäßig in mindestens acht Sektoren S1 bis S8 untergliedert ist und die Kraftmesseinrichtung eine Auswerteeinheit zur Messwertbildung mindestens einer Kraftkomponente umfasst, wobei
- auf jedem einzelnen Sektor S1 bis S8 mindestens ein Verformungsaufnehmer angeordnet ist und
- jedem Sektor auf der rohrartigen Verformungszone (3) ein um 180° um die Mittelachse (7) der Verformungszone (3) versetzter zweiter Sektor mit einer gleichartigen Anordnung von Verformungsaufnehmern gegenüberliegt,
**dadurch gekennzeichnet, dass**
alle Verformungsaufnehmer eines Sektors jeweils in einer gemeinsamen Wheatstonebrücke miteinander verschaltet sind.

2. Kraftmesseinrichtung nach Anspruch 1, **dadurch gekennzeichnet, dass** die Verformungsaufnehmer durch Dehnmessstreifen gebildet sind.

3. Kraftmesseinrichtung nach einem der Ansprüche 1 und 2, **dadurch gekennzeichnet, dass** die Messwertbildung mindestens einer Kraftkomponente auf der Auswertung zweier Messkanäle basiert, wobei jeder Messkanal aus mindestens einem auf der rohrartigen Verformungszone (3) angeordneten Verformungsaufnehmer, einem Messumformer und einer Ausgabeeinheit zur Bereitstellung des Einzelmesswertes an die Auswerteeinheit besteht, und die Auswerteeinheit die Einzelmesswerte der beiden Messkanäle miteinander verrechnet oder vergleicht und das aus dieser Berechnung oder diesem Vergleich hervorgehende Ergebnis den gewünschten Messwert bildet.

4. Kraftmesseinrichtung nach einem der Ansprüche 1 bis 3, **dadurch gekennzeichnet, dass** die rohrartige Verformungszone (3) in acht aneinandergrenzende Sektoren S1 bis S8 untergliedert ist.

5. Kraftmesseinrichtung nach einem der vorangegangenen Ansprüche, **dadurch gekennzeichnet, dass**
- die den Sektoren S1, S3, S5 und S7 zugeordneten Verformungsaufnehmer (4) der Erfassung von Scherverformungen der rohrartigen Verformungszone (3) dienen, deren Hauptrichtung lotrecht zur Mittelachse (7) der Verformungszone (3) liegt, und
- die den Sektoren S2, S4, S6 und S8 zugeordneten Verformungsaufnehmer (4) der Erfassung von Längsverformungen der rohrartigen Verformungszone (3) dienen, deren Hauptrichtung parallel zur Mittelachse (7) der Verformungszone (3) liegt.

6. Kraftmesseinrichtung nach einem der vorangegangenen Ansprüche, **dadurch gekennzeichnet**, jedem der acht Sektoren S1 bis S8 genau ein Messkanal 1 bis 8 zugeordnet ist.

7. Kraftmesseinrichtung nach einem der vorangegangenen Ansprüche, **dadurch gekennzeichnet, dass** jedem Sektor mindestens vier Messgitter zugeordnet sind, welche alle in einer gemeinsamen Vollbrücke verschaltet sind.

8. Kraftmesseinrichtung nach den vorangegangenen Ansprüchen 5 bis 7, **dadurch gekennzeichnet, dass** sie sechsachsig zur Erfassung von Kraftkomponenten Fx, Fy und Fz und von Momenten Mx, My und Mz ausgebildet ist und die Auswerteeinheit
- durch einen rechnerischen Vergleich der Messwerte der Messkanäle 1, 3, 5 und 7 die Kraftkomponenten Fx und Fy sowie das wirksame Moment Mz ermittelt, und
- durch einen rechnerischen Vergleich der Messwerte der Messkanäle 2, 4, 6 und 8 in einem die Kraftkomponente Fz sowie die wirksamen Momente Mx und My ermittelt.

9. Kraftmesseinrichtung nach Anspruch 5, **dadurch gekennzeichnet, dass** sie dreiachsig zur Erfassung von Kraftkomponenten Fx, Fy und Fz ausgebildet ist und
- die Verformungsaufnehmer einander gegenüberliegender Sektoren S1/S5, S2/S6, S3/S7 und S4/S8 Paare bilden, die in einer Wheatstonebrücke miteinander verschaltet sind und diese Paare je einem Messkanal 1 bis 4 zugeordnet sind und
- der Messkanal 1(S1/S5) den Messwert für die Kraftkomponente Fx liefert,
- der Messkanal 3 (S3/S7) den Messwert für die Kraftkomponente Fy liefert, und
- die Messkanäle 2 (S2/S6) und 4 (S4/S8) je einen Messwert für die Kraftkomponente Fz liefern.

10. Kraftmesseinrichtung nach dem vorangegangenen Anspruch 9, **dadurch gekennzeichnet, dass** die Auswerteeinheit durch einen rechnerischen Vergleich der Messwerte der Messkanäle 2 und 4 die Kraftwirkung Fz ermittelt.

11. Kraftmesseinrichtung nach Anspruch 1, **dadurch gekennzeichnet, dass** sie dreiachsig zur Erfassung von Momenten Mx, My und Mz ausgebildet ist, wobei
- die den Sektoren S1, S3, S5 und S7 zugeordneten Verformungsaufnehmer (4) der Erfassung von Längsverformungen der rohrartigen Verformungszone (3) dienen, deren Hauptrichtung parallel zur Mittelachse (7) der Verformungszone (3) liegt,
- die den Sektoren S2, S4, S6 und S8 zugeordneten Verformungsaufnehmer (4) der Erfassung von Scherverformungen der rohrartigen Verformungszone (3) dienen, deren Hauptrichtung lotrecht zur Mittelachse (7) der Verformungszone (3) liegt, und
- die Verformungsaufnehmer (4) einander gegenüberliegender Sektoren S1/S5, S2/S6, S3/S7 und S4/S8 Paare bilden, die in einer gemeinsamen Wheatstonebrücke miteinander verschaltet sind und diese Paare je einem Messkanal 1 bis 4 zugeordnet sind und
- der Messkanal 1(S1/S5) den Messwert für das Moment Mx liefert,
- der Messkanal 3 (S3/S7) den Messwert für das Moment My liefert, und
- die Messkanäle 2 (S2/S6) und 4 (S4/S8) je einen Messwert für das Moment Mz liefern.

12. Kraftmesseinrichtung nach Anspruch 1, **dadurch gekennzeichnet, dass** sie vierachsig zur Erfassung von Kräften Fx, Fy und Fz und dem Moment Mz ausgebildet ist, wobei
- die den Sektoren S1 und S5 zugeordneten Verformungsaufnehmer (4) Scherverformungen der rohrartigen Verformungszone (3) erfassen, deren Hauptrichtung lotrecht zur Mittelachse (7) der Verformungszone (3) liegt und die in einer gemeinsamen Wheatstonebrücke verschaltet sind, welche der Messwertbildung für die Kraftkomponente Fx dient, und
- die den Sektoren S3 und S7 zugeordneten Verformungsaufnehmer (4) Scherverformungen der rohrartigen Verformungszone (3) erfassen, deren Hauptrichtung lotrecht zur Mittelachse (7) der Verformungszone (3) liegt und die in einer gemeinsamen Wheatstonebrücke verschaltet sind, welche der Messwertbildung für die Kraftkomponente Fy dient, und
- eines der gegenüberliegenden Paare von Verformungsaufuehmern (4) in den Sektoren S2 und S6 beziehungsweise S4 und S8 ebenfalls Scherverformungen der rohrartigen Verformungszone (3) erfassen, deren Hauptrichtung lotrecht zur Mittelachse (7) der Verformungszone (3) liegt und die in einer gemeinsamen Wheatstonebrücke verschaltet sind, welche der Messwertbildung für das Moment Mz dient, und
- das verbleibende Paar von Verformungsaufnehmern (4) Längsverformungen der rohrartigen Verformungszone (3) erfasst, deren Hauptrichtung parallel zur Mittelachse (7) der Verformungszone (3) liegt und die in einer gemeinsamen Wheatstonebrücke verschaltet sind, welche der Messwertbildung für die Kraftkomponente Fz dient.

13. Kraftmesseinrichtung nach Anspruch 1, **dadurch gekennzeichnet, dass** sie vierachsig zur Erfassung von Momenten Mx, My und Mz und der Kraft Fz ausgebildet ist, wobei
- die den Sektoren S1 und S5 zugeordneten Verformungsaufnehmer (4) Längsverformungen der rohrartigen Verformungszone (3) erfassen, deren Hauptrichtung parallel zur Mittelachse (7) liegt und die in einer gemeinsamen Wheatstonebrücke verschaltet sind, welche der Messwertbildung für die Kraftkomponente Mx dient, und
- die den Sektoren S3 und S7 zugeordneten Verformungsaufnehmer (4) Längsverformungen der rohrartigen Verformungszone (3) erfassen, deren Hauptrichtung parallel zur Mittelachse (7) der Verformungszone (3) liegt und die in einer gemeinsamen Wheatstonebrücke verschaltet sind, welche der Messwertbildung für die Kraftkomponente My dient, und
- eines der gegenüberliegenden Paare von Verformungsaufnehmern (4) in den Sektoren S2 und S6 beziehungsweise S4 und S8 ebenfalls Längsverformungen der rohrartigen Verformungszone (3) erfassen, deren Hauptrichtung parallel zur Mittelachse (7) der Verformungszone (3) liegt und die in einer gemeinsamen Wheatstonebrücke verschaltet sind, welche der Messwertbildung für die Kraft Fz dient, und
- das verbleibende Paar von Verformungsaufnehmern (4) Scherverformungen der rohrartigen Verformungszone (3) erfasst, deren Hauptrichtung lotrecht zur Mittelachse (7) der Verformungszone (3) liegt und die in einer gemeinsamen Wheatstonebrücke verschaltet sind, welche der Messwertbildung für das Moment Mz dient.

14. Kraftmesseinrichtung nach einem der vorangegangenen Ansprüche, **dadurch gekennzeichnet, dass** die Höhe H der rohrartigen Verformungszone (3) kleiner oder gleich der Höhe h der Verformungsaufnehmer (4) in Richtung der Mittelachse (7) der Verformungszone (3) ist.

## Claims

1. A force measuring device for the at least tri-axial recording of forces Fx, Fy and Fz and/or of moments Mx, My and Mz, consisting of a first flange-like part (1), via which the forces/moments to be measured are introduced, a second flange-like part (2), via which the introduced forces/moments are received and dissipated, and a tube-like deformation zone (3), which connects these two parts and via which all tensile, compressive, torsional and shearing forces acting on the first flange-like part (1) are transmitted to the second flange-like part (2), wherein at least the inner or outer surface of the tube-like deformation zone (3) serves as an application surface (5) for deformation transducers (4), and the tube-like deformation zone (3) is circumferentially divided into at least eight sectors S1 to S8, and the force measuring device comprises an evaluation unit for forming measured values of at least one force component, wherein
- at least one deformation transducer is disposed on each individual sector S1 to S8,
- a second sector with a similar arrangement of deformation transducers, which is offset by 180° around the central axis (7) of the deformation zone (3), is located opposite each sector on the tube-like deformation zone (3),
**characterized in that**
all deformation transducers of one sector are each connected to each other in a common Wheatstone bridge.

2. The force measuring device according to claim 1, **characterized in that** the deformation transducers are formed by strain gauges.

3. The force measuring device according to any one of the claims 1 and 2, **characterized in that** the formation of measured values of at least one force component is based on the evaluation of two measuring channels, wherein each measuring channel consists of at least one deformation transducer disposed on the tube-like deformation zone (3), a measuring transmitter and an output unit for providing the individual measured value to the evaluation unit, and the evaluation unit enters the individual measured values of the two measuring channels into a calculation or compares them, and the result produced by this calculation or comparison forms the desired measured value.

4. The force measuring device according to any one of the claims 1 to 3, **characterized in that** the tube-like deformation zone (3) is divided into eight adjacent sectors S1 to S8.

5. The force measuring device according to any one of the preceding claims, **characterized in that**
- the deformation transducers (4) allocated to the sectors S1, S3, S5 and S7 serve for recording shear deformations of the tube-like deformation zone (3) whose primary direction is perpendicular to the central axis (7) of the deformation zone (3), and
- the deformation transducers (4) allocated to the sectors S2, S4, S6 and S8 serve for recording longitudinal deformations of the tube-like deformation zone (3) whose primary direction is parallel to the central axis (7) of the deformation zone (3).

6. The force measuring device according to any one of the preceding claims, **characterized in that** exactly one measuring channel 1 to 8 is allocated to each of the eight sectors S1 to S8.

7. The force measuring device according to any one of the preceding claims, **characterized in that** at least four measuring grids, which are all connected to each other in a common full bridge, are allocated to each sector.

8. The force measuring device according to the preceding claims 5 to 7, **characterized in that** it has a six-axis configuration for recording force components Fx, Fy and Fz and moments Mx, My and Mz, and the evaluation unit
- determines, by means of a computational comparison of the measured values of the measuring channels 1, 3, 5 and 7, the force components Fx and Fy and the effective moment Mz, and
- determines, by means of a computational comparison of the measured values of the measuring channels 2, 4, 6 and 8, the force component Fz and the effective moments Mx and My.

9. The force measuring device according to claim 5, **characterized in that** it has a triaxial configuration for recording force components Fx, Fy and Fz, and
- the deformation transducers of opposite sectors S1/S5, S2/S6, S3/S7 and S4/S8 form pairs connected to each other in a Wheatstone bridge, and these pairs are each allocated to one measuring channel 1 to 4, and
- the measuring channel 1 (S1/S5) provides the measured value for the force component Fx,
- the measuring channel 3 (S3/S7) provides the measured value for the force component Fy, and
- the measuring channels 2 (S2/S6) and 4 (S4/S8) each provide one measured value for the force component Fz.

10. The force measuring device according to the preceding claim 9, **characterized in that** the evaluation unit determines, by means of a computational comparison of the measured values of the measuring channels 2 and 4, the force effect Fz.

11. The force measuring device according to claim 1, **characterized in that** it has a triaxial configuration for recording moments Mx, My and Mz, wherein
- the deformation transducers (4) allocated to the sectors S1, S3, S5 and S7 serve for recording longitudinal deformations of the tube-like deformation zone (3) whose primary direction is parallel to the central axis (7) of the deformation zone (3),
- the deformation transducers (4) allocated to the sectors S2, S4, S6 and S8 serve for recording shear deformations of the tube-like deformation zone (3) whose primary direction is perpendicular to the central axis (7) of the deformation zone (3), and
- the deformation transducers (4) of opposite sectors S1/S5, S2/S6, S3/S7 and S4/S8 form pairs connected to each other in a common Wheatstone bridge, and these pairs are each allocated to one measuring channel 1 to 4, and
- the measuring channel 1 (S1/S5) provides the measured value for the moment Mx,
- the measuring channel 3 (S3/S7) provides the measured value for the moment My, and
- the measuring channels 2 (S2/S6) and 4 (S4/S8) each provide one measured value for the moment Mz.

12. The force measuring device according to claim 1, **characterized in that** it has a four-axis configuration for recording forces Fx, Fy and Fz and the moment Mz, wherein
- the deformation transducers (4) allocated to the sectors S1 and S5 record shear deformations of the tube-like deformation zone (3) whose primary direction is perpendicular to the central axis (7) of the deformation zone (3), and which are connected to each other in a common Wheatstone bridge, which serves for forming measured values for the force component Fx, and
- the deformation transducers (4) allocated to the sectors S3 and S7 record shear deformations of the tube-like deformation zone (3) whose primary direction is perpendicular to the central axis (7) of the deformation zone (3), and which are connected to each other in a common Wheatstone bridge, which serves for forming measured values for the force component Fy, and
- one of the opposite pairs of deformation transducers (4) in the sectors S2 and S6, or S4 and S8, also records shear deformations of the tube-like deformation zone (3) whose primary direction is perpendicular to the central axis (7) of the deformation zone (3), and which are connected to each other in a common Wheatstone bridge, which serves for forming measured values for the moment Mz, and
- the remaining pair of deformation transducers (4) records longitudinal deformations of the tube-like deformation zone (3) whose primary direction is parallel to the central axis (7) of the deformation zone (3), and which are connected to each other in a common Wheatstone bridge, which serves for forming measured values for the force component Fz.

13. The force measuring device according to claim 1, **characterized in that** it has a four-axis configuration for recording moments Mx, My and Mz and the force Fz, wherein
- the deformation transducers (4) allocated to the sectors S1 and S5 record longitudinal deformations of the tube-like deformation zone (3) whose primary direction is parallel to the central axis (7), and which are connected to each other in a common Wheatstone bridge, which serves for forming measured values for the force component Mx, and
- the deformation transducers (4) allocated to the sectors S3 and S7 record longitudinal deformations of the tube-like deformation zone (3) whose primary direction is parallel to the central axis (7) of the deformation zone (3), and which are connected to each other in a common Wheatstone bridge, which serves for forming measured values for the force component My, and
- one of the opposite pairs of deformation transducers (4) in the sectors S2 and S6, or S4 and S8, also records longitudinal deformations of the tube-like deformation zone (3) whose primary direction is perpendicular to the central axis (7) of the deformation zone (3), and which are connected to each other in a common Wheatstone bridge, which serves for forming measured values for the force Fz, and
- the remaining pair of deformation transducers (4) records shear deformations of the tube-like deformation zone (3) whose primary direction is perpendicular to the central axis (7) of the deformation zone (3), and which are connected to each other in a common Wheatstone bridge, which serves for forming measured values for the moment Mz.

14. The force measuring device according to any one of the preceding claims, **characterized in that** the height H of the tube-like deformation zone (3) is less than or equal to the height h of the deformation transducers (4) in the direction of the central axis (7) of the deformation zone (3).

## Revendications

1. Dispositif de mesure de force pour la détection au moins triaxiale de forces Fx, Fy et Fz et/ou de moments Mx, My et Mz, se composant d'une première partie (1) de type bride par le biais de laquelle les forces/moments à mesurer sont appliqué(e)s, d'une deuxième partie (2) de type bride par le biais de laquelle les forces/moments appliqué(e)s sont absorbé(e)s et dissipé(e)s, et d'une zone de déformation (3) de type tube qui relie ces deux parties et par le biais de laquelle l'ensemble des forces de traction, de pression, de torsion et de cisaillement agissant sur la première partie (1) de type bride sont transmises à la deuxième partie (2) de type bride, dans lequel au moins la surface intérieure ou extérieure de la zone de déformation (3) de type tube sert de surface d'application (5) pour des capteurs de déformation (4), et la zone de déformation (3) de type tube est subdivisée circonférentiellement en au moins huit secteurs S1 à S8, et le dispositif de mesure de force comprend une unité d'évaluation pour former des valeurs de mesure d'au moins une composante de force, dans lequel
- au moins un capteur de déformation est disposé sur chaque secteur S1 à S8 individuel et
- en regard de chaque secteur sur la zone de déformation (3) de type tube est disposé un deuxième secteur décalé de 180° autour de l'axe central (7) de la zone de déformation (3) et ayant un ensemble similaire de capteurs de déformation,
**caractérisé par le fait que**
tous les capteurs de déformation d'un secteur sont interconnectés respectivement dans un pont de Wheatstone commun.

2. Dispositif de mesure de force selon la revendication 1, **caractérisé par le fait que** les capteurs de déformation sont constitués par des jauges de contrainte.

3. Dispositif de mesure de force selon l'une quelconque des revendications 1 et 2, **caractérisé par le fait que** la formation de valeur de mesure d'au moins une composante de force se base sur l'évaluation de deux canaux de mesure, dans lequel chaque canal de mesure se compose d'au moins un capteur de déformation disposé sur la zone de déformation (3) de type tube, d'un transducteur de mesure et d'une unité de sortie destinée à fournir la valeur de mesure individuelle à l'unité d'évaluation, et l'unité d'évaluation calcule ou compare entre elles les valeurs de mesure individuelles des deux canaux de mesure, et le résultat résultant de ce calcul ou de cette comparaison forme la valeur de mesure souhaitée.

4. Dispositif de mesure de force selon l'une quelconque des revendications 1 à 3, **caractérisé par le fait que** la zone de déformation (3) de type tube est subdivisée en huit secteurs S1 à S8 adjacents les uns aux autres.

5. Dispositif de mesure de force selon l'une quelconque des revendications précédentes, **caractérisé par le fait que**
- les capteurs de déformation (4) associés aux secteurs S1, S3, S5 et S7 servent à détecter des déformations de cisaillement de la zone de déformation (3) de type tube, dont la direction principale est perpendiculaire à l'axe central (7) de la zone de déformation (3), et
- les capteurs de déformation (4) associés aux secteurs S2, S4, S6 et S8 servent à détecter des déformations longitudinales de la zone de déformation (3) de type tube, dont la direction principale est parallèle à l'axe central (7) de la zone de déformation (3).

6. Dispositif de mesure de force selon l'une quelconque des revendications précédentes, **caractérisé par le fait qu'**exactement un canal de mesure 1 à 8 est associé à chacun des huit secteurs S1 à S8.

7. Dispositif de mesure de force selon l'une quelconque des revendications précédentes, **caractérisé par le fait qu'**à chaque secteur sont associées au moins quatre grilles de mesure qui sont toutes interconnectées en un pont intégral commun.

8. Dispositif de mesure de force selon les revendications précédentes 5 à 7, **caractérisé par le fait qu'**il est conçu à six axes pour détecter des composantes de force Fx, Fy et Fz et des moments Mx, My et Mz, et que l'unité d'évaluation
- détermine, au moyen d'une comparaison par calcul des valeurs de mesure des canaux de mesure 1, 3, 5 et 7, les composantes de force Fx et Fy ainsi que le moment effectif Mz, et
- détermine, au moyen d'une comparaison par calcul des valeurs de mesure des canaux de mesure 2, 4, 6 et 8, la composante de force Fz ainsi que les moments effectifs Mx et My.

9. Dispositif de mesure de force selon la revendication 5, **caractérisé par le fait qu'**il est conçu à trois axes pour détecter des composantes de force Fx, Fy et Fz, et
- les capteurs de déformation de secteurs S1/S5, S2/S6, S3/S7 et S4/S8 opposés les uns aux autres forment des paires qui sont interconnectées dans un pont de Wheatstone, et que ces paires sont associées chacune à un canal de mesure 1 à 4, et
- le canal de mesure 1 (S1/S5) fournit la valeur de mesure pour la composante de force Fx,
- le canal de mesure 3 (S3/S7) fournit la valeur de mesure pour la composante de force Fy, et
- les canaux de mesure 2 (S2/S6) et 4 (S4/S8) fournissent chacun une valeur de mesure pour la composante de force Fz.

10. Dispositif de mesure de force selon la revendication 9 précédente, **caractérisé par le fait que** l'unité d'évaluation détermine l'effet de force Fz par une comparaison par calcul des valeurs de mesure des canaux de mesure 2 et 4.

11. Dispositif de mesure de force selon la revendication 1, **caractérisé par le fait qu'**il est conçu à trois axes pour détecter des moments Mx, My et Mz, dans lequel
- les capteurs de déformation (4) associés aux secteurs S1, S3, S5 et S7 servent à détecter des déformations longitudinales de la zone de déformation (3) de type tube, dont la direction principale est parallèle à l'axe central (7) de la zone de déformation (3),
- les capteurs de déformation (4) associés aux secteurs S2, S4, S6 et S8 servent à détecter des déformations de cisaillement de la zone de déformation (3) de type tube, dont la direction principale est perpendiculaire à l'axe central (7) de la zone de déformation (3), et
- les capteurs de déformation (4) de secteurs S1/S5, S2/S6, S3/S7 et S4/S8 opposés les uns aux autres forment des paires qui sont interconnectées dans un pont de Wheatstone commun, et ces paires sont associées chacune à un canal de mesure 1 à 4, et
- le canal de mesure 1 (S1/S5) fournit la valeur de mesure pour le moment Mx,
- le canal de mesure 3 (S3/S7) fournit la valeur de mesure pour le moment My, et
- les canaux de mesure 2 (S2/S6) et 4 (S4/S8) fournissent chacun une valeur de mesure pour le moment Mz.

12. Dispositif de mesure de force selon la revendication 1, **caractérisé par le fait qu'**il est conçu à quatre axes pour détecter des forces Fx, Fy et Fz et le moment Mz, dans lequel
- les capteurs de déformation (4) associés aux secteurs S1 et S5 détectent des déformations de cisaillement de la zone de déformation (3) de type tube, dont la direction principale est perpendiculaire à l'axe central (7) de la zone de déformation (3) et qui sont interconnectés dans un pont de Wheatstone commun qui sert à former la valeur de mesure pour la composante de force Fx, et
- les capteurs de déformation (4) associés aux secteurs S3 et S7 détectent des déformations de cisaillement de la zone de déformation (3) de type tube, dont la direction principale est perpendiculaire à l'axe central (7) de la zone de déformation (3) et qui sont interconnectés dans un pont de Wheatstone commun qui sert à former la valeur de mesure pour la composante de force Fy, et
- l'une des paires opposées de capteurs de déformation (4) dans les secteurs S2 et S6 ou bien S4 et S8 détecte également des déformations de cisaillement de la zone de déformation (3) de type tube, dont la direction principale est perpendiculaire à l'axe central (7) de la zone de déformation (3) et qui sont interconnectés dans un pont de Wheatstone commun qui sert à former la valeur de mesure pour le moment Mz, et
- la paire restante de capteurs de déformation (4) détecte des déformations longitudinales de la zone de déformation (3) de type tube, dont la direction principale est parallèle à l'axe central (7) de la zone de déformation (3) et qui sont interconnectés dans un pont de Wheatstone commun qui sert à former la valeur de mesure pour la composante de force Fz.

13. Dispositif de mesure de force selon la revendication 1, **caractérisé par le fait qu'**il est conçu à quatre axes pour détecter des moments Mx, My et Mz et la force Fz, dans lequel
- les capteurs de déformation (4) associés aux secteurs S1 et S5 détectent des déformations longitudinales de la zone de déformation (3) de type tube, dont la direction principale est parallèle à l'axe central (7) et qui sont interconnectés dans un pont de Wheatstone commun qui sert à former la valeur de mesure pour la composante de force Mx, et
- les capteurs de déformation (4) associés aux secteurs S3 et S7 détectent des déformations longitudinales de la zone de déformation (3) de type tube, dont la direction principale est parallèle à l'axe central (7) de la zone de déformation (3) et qui sont interconnectés dans un pont de Wheatstone commun qui sert à former la valeur de mesure pour la composante de force My, et
- l'une des paires opposées de capteurs de déformation (4) dans les secteurs S2 et S6 ou bien S4 et S8 détecte également des déformations longitudinales de la zone de déformation (3) de type tube, dont la direction principale est parallèle à l'axe central (7) de la zone de déformation (3) et qui sont interconnectés dans un pont de Wheatstone commun qui sert à former la valeur de mesure pour la force Fz, et
- la paire restante de capteurs de déformation (4) détecte des déformations de cisaillement de la zone de déformation (3) de type tube, dont la direction principale est perpendiculaire à l'axe central (7) de la zone de déformation (3) et qui sont interconnectés dans un pont de Wheatstone commun qui sert à former la valeur de mesure pour le moment Mz.

14. Dispositif de mesure de force selon l'une quelconque des revendications précédentes, **caractérisé par le fait que** la hauteur H de la zone de déformation (3) de type tube est inférieure ou égale à la hauteur h du capteur de déformation (4) en direction de l'axe central (7) de la zone de déformation (3).
